# EUROPEAN PATENT SPECIFICATION

(11) **EP 3 307 585 B1**
(45) Date of publication and mention of the grant of the patent: **18.12.2019**
(21) Application number: 16728932.1
(22) Date of filing: 09.06.2016
(51) Int. Cl.: B60L 53/80, B60K 1/04, B66F 9/06, B60L 50/64, B60S 5/06

(54) **BATTERY EXCHANGE SYSTEM**
BATTERIEAUSTAUSCHSYSTEM
SYSTÈME D'ÉCHANGE DE BATTERIE

(30) Priority: 10.06.2015 US 201562173716 P
(43) Date of publication of application: 18.04.2018
(73) Proprietor: Battswap, Inc., Lewes, Delaware 19958 (US)
(72) Inventor: JANKU, Radek, 16000 Prague (CZ)
(74) Representative: Plasseraud IP
(86) International application number: PCT/EP2016/063221
(87) International publication number: WO 2016/198552

(56) References cited:
- EP-A1- 2 616 291
- EP-A1- 2 722 211
- WO-A1-2010/070642
- WO-A1-2010/070642
- DE-A1-102008 056 895
- DE-A1-102008 056 895
- DE-A1-102011 108 199
- DE-A1-102011 108 199
- DE-A1-102012 012 739
- DE-A1-102012 218 809
- JP-A- 2011 168 127
- JP-A- 2011 168 127
- US-A- 5 612 606
- US-A1- 2012 097 489
- US-A1- 2012 111 654
- US-A1- 2012 111 654
- US-A1- 2014 250 653

## Description

### FIELD OF THE INVENTION

The invention relates to battery exchange systems for electric cars (including hybrid cars).

### BACKGROUND OF THE INVENTION

Electric cars require specific power management. When the battery is discharged, it must be either recharged or replaced. The charging process may introduce considerable delay for the car user, or can be uncomfortable because of charging point access in the street. Battery exchange stations operate in two stage process. Firstly the discharged battery must be removed and secondly the fully charged battery must be installed. Existing battery exchange systems require precise car alignment and adequate hoisting mechanism. DE102011108199A1 discloses a battery exchange system with a roller system with motor driven rollers to transport a battery to the vehicle. The overall process of existing battery exchange systems, for instant as taught by US5612606, JP 2011 168127 A, WO 2010/070642 A1, DE 10 2008 056895 A1 or US 2012/111654 A1, is time demanding and requires costly equipment.

### SUMMARY OF THE INVENTION

One objective of the present invention is to remedy these drawbacks.

To this end, the invention is defined by independent claim 1 and claims in claim 1 a battery exchange system for a battery powered electric vehicle, comprising:
- an interchangeable battery block;
- a battery dock defined at the underside of the electric vehicle and open downwards, said battery dock being adapted to receive the battery block for electrical and mechanical connection by vertical fitting when such battery is lifted from beneath the electric vehicle, said battery block being in a predetermined reference position, defined in a horizontal plane, relative to the electric vehicle when said battery block is electrically and mechanically connected to the battery dock;
- a battery lift for lifting the battery block underneath the electric vehicle;
wherein the battery block has an external casing including a peripheral wall and said peripheral wall has a pyramid shaped part forming at least one bevel shaped male part,
and in that the battery dock has an internal casing including an internal peripheral wall and the internal peripheral wall has a pyramid shaped internal part forming at least one bevel shaped female part,
and in that the battery block and the battery dock have guides adapted to mutually cooperate for guiding the battery block substantially horizontally toward the reference position when the battery block is lifted for fitting with the battery dock and the guides include at least one bevel shaped male part and the at least one bevel shaped female part adapted to receive the bevel shaped male part,
and in that the guides include sliding surfaces which are adapted to slide on one another freely for the guiding of said battery block horizontaly toward the reference position,
and in that the battery lift is adapted to let the battery block move freely substantially horizontally relative to the electric vehicle when the battery block is lifted for fitting with the battery dock and guided horizontally toward the reference position,
and in that the battery lift includes a platform for supporting the battery block and a lift assembly for raising and lowering the platform, characterized in that the battery block being freely movable horizontally on the platform and the battery block is horizontally slidable on the platform or rollingly supported on the platform so as to be freely movable on the platform.

Thanks to these dispositions, the fitting of the battery block with the battery dock is mechanically guided in a very simple and cheap way, which enables to use a simpler and less precise positionning system to position the battery lift under the electric vehicle.

In various embodiments of the battery exchange system according to the invention, one may possibly have recourse in addition to one and/or other of the following arrangements:
- said guides include at least one bevel shaped male part and at least one female part which is adapted to receive said bevel shaped male part, said bevel shaped male part and female part belonging, one to the battery block and the other to the battery dock;
- the battery block has an external casing including a peripheral wall and said at least one bevel shaped male part belongs to said peripheral wall;
- said peripheral wall has a pyramid shaped part forming said at least one bevel shaped male part;
- said at least one bevel shaped male part is at least a conical stud;
- said battery block extends longitudinally in a first horizontal direction and said at least one bevel shaped male part tapers at least in a second horizontal direction substantially perpendicular to said first horizontal direction;
- said battery block extends longitudinally in a first horizontal direction and said at least one bevel shaped female part tapers at least in a second horizontal direction substantially perpendicular to said first horizontal direction;
- said guides include respectively at least a roller and a tapering surface on which said roller is adapted to roll for guiding the battery block horizontally toward the reference position;
- the battery lift is adapted to be freely movable horizontally relative to the electric vehicle when the battery block is lifted for fitting in the battery dock and guided horizontally toward the reference position;
- the battery lift includes a platform for supporting the battery block and a lift assembly for raising and lowering the platform, said battery block being freely movable horizontally on the platform;- said platform has rollers;- said battery block is rollingly supported on the platform in a first direction, said rollers extending in a second direction substantially perpendicular to the first direction and enabling free sliding of the battery block in the second direction;
- the battery exchange system further includes a battery exchange station having:
   - a vehicle lane on which the electric vehicle can advance in a first horizontal direction;
   - a lift lane along which the lift can move in a second direction substantially perpendicular to the first direction, said lift lane being under the vehicle lane,
wherein the vehicle lane has an opening adapted to give free passage to the battery block when the battery block is lifted for fitting in the battery dock, said opening being in correspondence with the lift lane;
- the vehicle lane includes at least one wheel blocking device adapted to block the electric vehicle in a predetermined position suitable for battery exchange;
- the battery exchange system further includes an adjustment mechanism for adjusting a position of the blocking device in a direction parallel to the vehicle lane ;
- the battery exchange system further includes a reader adapted to read an information support related to the electric vehicle and a control unit adapted to control the adjustment mechanism based on said information ;
- the battery lift is movable horizontally relative to the vehicle and the battery exchange system further includes:
   - at least a position sensor adapted to detect whether the battery block is properly positioned relative to the battery dock for lifting the battery block toward the battery dock;
   - a control system adapted to move the lift relative to the vehicle according to information received from said position sensor.
- the battery lift includes:
   - a first platform for supporting a charged battery block,
   - a first lift assembly for raising and lowering the first platform,
   - a second platform for supporting a discharged battery block,
   - a second lift assembly for raising and lowering the second platform;
- said guides are adapted to move the battery block substantially horizontally relative to the electric vehicle on a maximum amplitude which is more than 1 cm, preferably more than 3 cm, more preferably more than 5 cm, for instance between 3 and 15 cm, in particular between 3 and 10 cm;
- the battery block is freely movable substantially horizontally (for instance freely movably supported on a platform belonging to the battery lift) on at least said maximum amplitude.

The invention relates to a universal battery block usable in various types of electric car, and its mounting in the center console of the vehicle chassis, a process of battery exchange and a system for battery exchange. One advantage of the invention is represented by a shaped battery block, enabling a quick and inexpensive replacement battery in an electric vehicle.

### BRIEF DESCRIPTION OF THE DRAWINGS

Other features and advantages of the invention appear from the following detailed description of several embodiments thereof, given by way of non-limiting examples, and with reference to the accompanying drawings.

In the drawings:
- Figure 1 is a schematic perspective view showing a battery block according to a first embodiment of the invention,
- Figure 1A is an end view of the battery block of Figure 1,
- Figures 1B to 1D are partial perspective views showing variants of the battery block of Figure 1,
- Figure 2 is a perspective schematic view showing a battery dock for receiving the battery block of Figure 1 under an electric vehicle, said battery dock being shown in inverted position
- Figure 3 shows a detail of a mechanical lock of the battery dock of Figure 2,
- Figures 4 and 4A show two variants of the battery lift (trolley) for transporting and lifting the battery blocks,
- Figures 5 and 6 show a front wheel blocking device (locking mechanism) with a pressure sensor, adapted to be positioned in the vehicle lane to position the vehicle,
- Figure 7 is a front view of the vehicle when changing the battery block,
- Figure 8 is a side view of the vehicle when changing the battery block,
- Figure 9 is a schematic perspective view of a battery block according to an example to understand the invention, shown with mechanical locks belonging to the battery dock of the vehicle,
- Figures 10 and 11 are respectively a top view and a side view of the battery block of Figure 9,
- and Figures 12 and 13 are schematic section views of the battery block of figure 9 when received in the battery dock of the vehicle.

### MORE DETAILLED DESCRIPTION

All the Figures are schematic; the dimensions of the various parts may be not always respected.

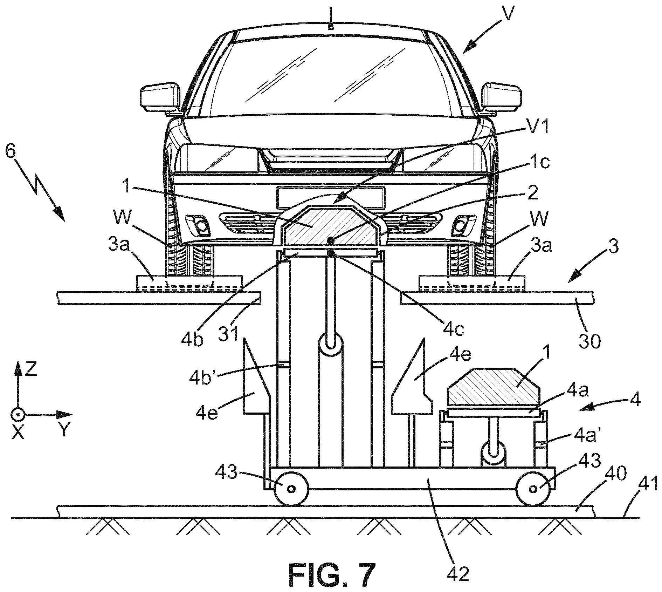

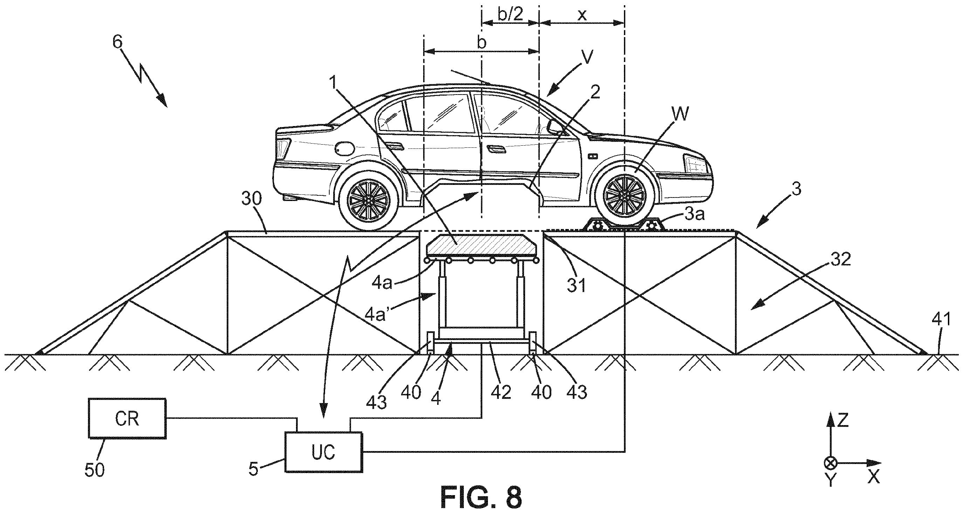

As best shown in Figures 7 and 8, the invention concerns a battery exchange system for a battery powered electric vehicle V. The electric vehicle V may be all electric or hybrid.

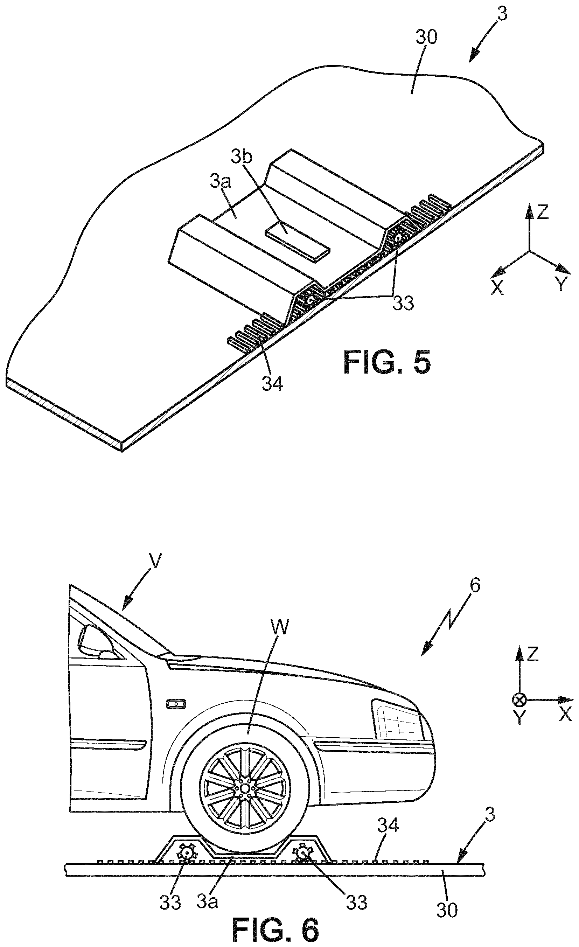

The battery exchange system comprises:
- an interchangeable battery block 1;
- a battery dock 2 fixed at the underside of the electric vehicle V (for instance in correspondence with the central tunnel of the electric vehicle V) and open downwards, said battery dock 2 being adapted to receive the battery block 1 for electrical and mechanical connection by vertical fitting when such battery is lifted from beneath the electric vehicle V;
- a battery lift 4 for lifting the battery block 1 underneath the electric vehicle V for bringing a charged battery block 1 from a charging storage (not shown), removing a discharged battery block 1 from the battery dock, fitting the charged battery block in the battery dock 2 and transporting the discharged battery to the charging storage,
- a control unit 5 (UC - Figure 6) such as a computer or similar, for controling the battery lift 4 and in some examples for communicating with the battery dock 2, a wheel blocking device 3a for blocking for instance the front wheels W of the vehicle and a card reader 50 (CR) preferably situated at the entrance of the vehicle lane 3 by which the vehicle V may drive up to the wheel blocking device 3a.

The control unit 5 is adapted to position the battery lift 4 to enable it to take the discharged battery block from the electric vehicle, and substantially to a position where the charged battery block 1 is close to a reference position, which is the exact position enabling the charged battery block 1 to fit with the battery dock 2 when lifted in the vertical direction Z.

The charged battery block 1 need not be exactly in this reference position though, it can be offset from this reference position by a few centimeters in any of the horizontal directions X, Y (in this example, X is the longitudinal direction of the electric vehicle V and Y is the transverse direction).

To deal with such situation, the battery block 1 and the battery dock 2 have guides adapted to mutually cooperate for guiding the battery block 1 horizontally toward the reference position when the battery block 1 is lifted for fitting in the battery dock 2. Further, the battery lift 4 is adapted to let the battery block 1 move freely horizontally relative to the electric vehicle V when the battery block 1 is lifted for fitting in the battery dock 2 and guided horizontally toward the reference position.

Said guides may include at least one bevel shaped male part and at least one female part which is adapted to receive said bevel shaped male part, said bevel shaped male part and female part belonging, one to the battery block 1 and the other to the battery dock 2. In a addition or as a variant, said guides may include at least one male part and at least one funnel shaped female part which is adapted to receive said male part, said male part and funnel shaped female part belonging, one to the battery block 1 and the other to the battery dock 2. Of course, both the male and female parts can be bevelled shaped. The bevelled shaped male and / or female part may taper in one horizontal direction (particularly the transverse direction Y) or both horizontal directions X, Y, or in all horizontal directions (e.g. conical shape).

Said guides may include sliding surfaces which are adapted to slide on one another for guiding the battery block 1 horizontally toward the reference position. The sliding surfaces of the guides may be smooth and rigid surfaces able to freely slide on one another with low friction. One of the surface may be flat and the other may include sliding pads or beads or ribs or other refiefs. The sliding surfaces may be metallic ; they can include an antifriction coating of low coefficient of coating, for instance Teflon (R) or other.

In a variant, said guides may include respectively at least a roller and a tapering surface on which said roller is adapted to roll for guiding the battery block 1 horizontally toward the reference position.

Regarding the way the free horizontal movement of the charged battery block 1 is obtained, the battery lift 4 may be adapted to be freely movable horizontally (at least in one direction, for instance the transverse direction Y or preferably in two directions) relative to the electric vehicle V when the battery block 1 is lifted for fitting in the battery dock 2 and guided horizontally toward the reference position. In a preferred variant or in addition to the above, the battery lift 4 may include a platform 4a for supporting the battery block 1 and a lift assembly 4a' for raising and lowering the platform 4a, and the battery block 1 is freely movable horizontally on the platform 4a (said battery block 1 may be horizontally slidable on the platform 4a and / or rollingly supported on the platform 4a). The respective sliding surfaces of the battery block 1 and platform 4a which slide one on another may be smooth and rigid surfaces able to freely slide on one another with low friction. One of the surface may be flat and the other may include sliding pads or beads or ribs or other refiefs, or rolls rolling in a first direction and enabling free sliding in a second direction substantially perpendicular to the first direction. The sliding surfaces may be metallic ; they can include an antifriction coating of low coefficient of coating, for instance Teflon (R) or other. The free movement of the battery block 1 on the platform 4a may be limited for instance by abutment to avoid having the battery block 1 fall from the platform 4a.

### First embodiment

### Intercheangeable battery block

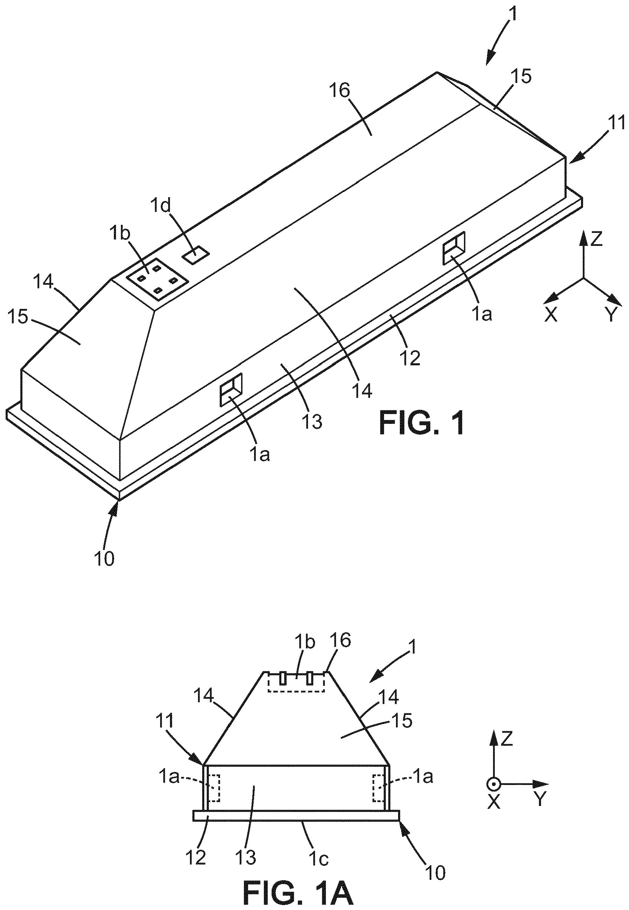

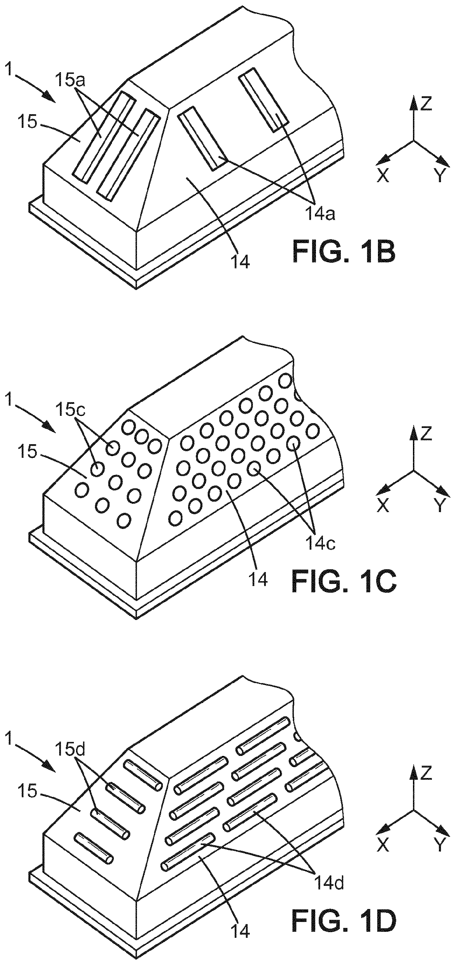

Figures 1, 1A show one example of the interchangeable battery block 1 according to the first embodiment of the invention.

In this first embodiment, the battery block 1 has an external casing 10 containing interconnected battery cells (not shown) and including a peripheral wall 11, a base 12 (which may for instance form a protruding ridge around the battery block 1) and a top portion 16. The peripheral wall 11 may have a lower part 13 of constant horizontal section and an upper pyramid shaped part forming said at least one bevel shaped male part.

The pyramid shaped part may include:
- two bevelled longitudinal sides 14 parallel to direction X and converging upwardly in direction Y toward the top portion 16,
- and two bevelled end sides 15 parallel to direction Y and converging upwardly in direction X toward the top portion 16.

The shape of the external casing 10 is thus here a truncated pyramid with a rectangular base and having a volume of for instance 150 liters. Typical dimensions for the external casing 10 can be: length 2000 mm, width 330 mm, height 240 mm.

The battery block may have an energy capacity of approximately 70 kWh, enabling a vehicle range of 300-500 km.

The lower part 13 of the peripheral wall 11 of the external casing 10 can form a circumferential supporting frame having holes 1a on its sides for inserting mechanical locks 2a from the battery dock.

The external casing 10 may have:
- electric connector terminals 1b for instance on the top portion 16;
- a data transfer connector 1d for instance on the top portion 16, fully concealed within the external casing 10and the upper edge of the connector is flush with the top portion 16;
and a position sensor (e.g. a mirror) 1c located for instance in the geometric center of the base 12 of the external casing 10.

The two bevelled longitudinal sides 14 and / or the two bevelled end sides 15 may have sliding surfaces, for instance metallic surfaces or surfaces coated with an antifriction material, i.e. a low friction material such as Teflon (R) or similar. These sliding surfaces may form the entire surfaces of said bevelled sides or may be provided as sliding pads 14a, 15a (Figure 1B) or sliding beads 14c, 15c (Figure 1C) on said bevelled sides.

In a variant, as shown on Figure 1D, the two bevelled longitudinal sides 14 and / or the two bevelled end sides 15 may have rollers 14d, 15d, in the form of rolling balls or rolls. In case the rollers are rolls, the rotation axis of the rollers 14d of bevelled sides 14 may be parallel to direction x and the rotation axis of the rollers 15d of bevelled sides 15 may be parallel to direction Y. The rollers may be made of or coated with silicone.

### Battery dock

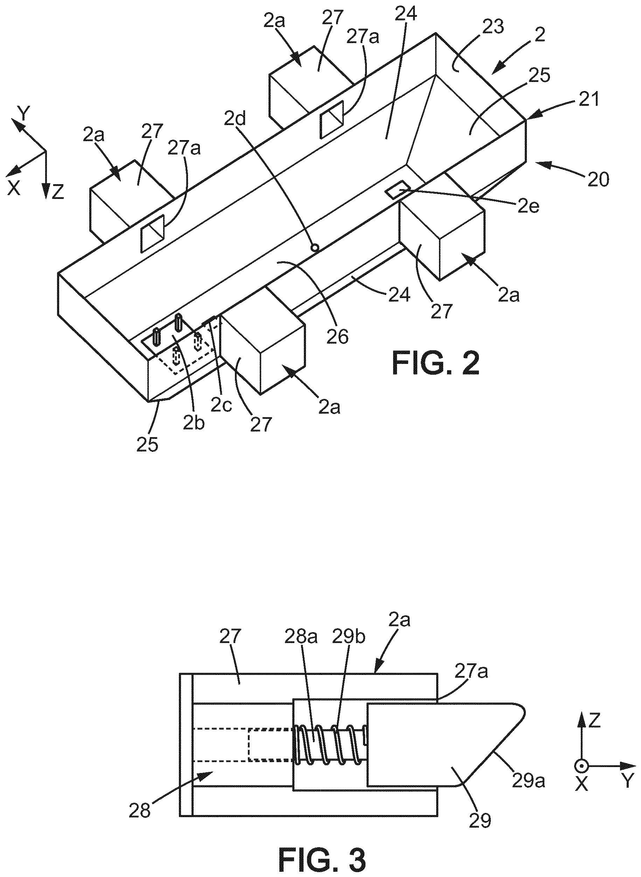

As shown in Figure 2, the battery dock 2 has an internal casing 20 having preferably a shape corresponding to the external casing 10 of the battery block 1, to fit with the peripheral wall 11 of said external casing 10.

In the example of Figure 2, the internal casing 20 has a peripheral wall 21 forming a lower opening, and a top portion 26.

The peripheral wall 21 may have a lower part 23 of constant horizontal section corresponding to that of said lower part 13 and an upper pyramid shaped part forming said at least one bevel shaped female part, of a shape corresponding to the shape of the pyramid shaped upper part 14, 15 of the peripheral wall 11 of the external casing 10.

The pyramid shaped part of peripheral wall 21 may include:
- two bevelled longitudinal sides 24 parallel to direction X and converging upwardly in direction Y toward the top portion 26,
- and two bevelled end sides 25 parallel to direction Y and converging upwardly in direction X toward the top portion 16.

The internal casing 20 may be firmly incorporated in the center tunnel V1 (very schematically shown on Figure 6) of the vehicle chassis so the lower part thereof is flush with the lower edge of the chassis. The front-rear axis of the battery housing lies directly in the front-rear axis of the electric car, i.e. in direction X.

The battery dock 2 is preferably connected to a backup power source such as an internal battery mounted inside the vehicle. Battery dock 2 may comprise mechanical locks 2a for attaching the battery block 1, electrical connectors 2b, data transfer connectors 2c and a device 2e for wireless communication with the control unit 5 unit and a pressure sensor 2d.

As shown in Figures 2 and 3, the mechanical locks 2a may each include a housing 27, an electromechanical drive 28 driving a stem 28a and a latch 29 which includes a beveled front face 29a and is elastically connected to the stem 28a by a spring 29b. The beveled front face 29a faces partly downwards, such that when the latch 29 is in locking position (protruding inside the battery dock as shown on Figure 3) the latch 29 is pushed backward into the housing 27 by camming effect by the battery block 1 when said battery block is being fitted with the battery dock 2. When said latch 29 faces the corresponding hole 1a of the battery block, it is automatically pushed inside said hole 1a by spring 29a. When the electromechanical drives 28 drive the stems 28a backward inside the housing 27, the latches 29 of the locks 2a are also driven inside the housing 27 and unlock the battery block 1.

The battery dock 2, and particularly beveled sides 24 and / or 25 (particularly sides 24), may also be provided with sliding surfaces and / or rollers similar to those described above with regard to the battery block 1. When the beveled sides 14, 15 are provided with beads or rollers, the corresponding sides 24, 25 may rather be flat surfaces. Conversely, when the beveled sides 24, 25 are provided with beads or rollers, the corresponding sides 14, 15 may rather be flat surfaces.

The device 2e for wireless communication is adapted for transmitting signals from the pressure sensor 2d to the control unit 5, receiving communications and processing orders from the control unit 5.

The battery dock 2 may further comprise a peripheral seal against moisture and dirt.

### Battery exchange station

The battery exchange system further includes a battery exchange station 6 as shown in Figures 7 and 8, comprising a vehicle lane 3 on which the electric vehicle V can advance in direction X. The vehicle lane 3 can be a raised ramp 30 on which the electric vehicle can roll from the level of ground 41, having an opening 31 for passing the battery block 1 therethrough when the battery block 1 is lifted for fitting in the battery dock 2. The ramp 30 may be supported by a supporting structure 32 of metal or else.

The vehicle lane 3 may include lateral guides for roughly positioning the electric vehicle V in direction Y. Further, as shown in more details in Figures 5 and 6, the vehicle lane 3 may be equipped with one or two front wheel blocking device(s) 3a for blocking the front wheels W of the electric vehicle when battery dock 2 is in register with opening 31. The blocking device 3a may be a cradle on which the electric vehicle can roll. The blocking device 3a may be equipped with a pressure sensor 3b connected to the control unit 5, for detecting a wheel W in said blocking device.

In case all vehicles V are identical or have identical distance from the front edge of the battery dock to the axis of the front wheels, the blocking machanism may be fixed and non-adjustable.

In other examples, particularly when the electric vehicles may be of various types, the blocking device 3a may be adjustable in a front-rear direction, i.e. in direction X. Such adjustment may be carried out by an electrical adjustment mechanism 33 controlled for instance by control unit 5. In one example, the blocking device 3a is slidably guided on the ramp 30 in direction X and adjustment mechanism 33 may include for instance one or more pinion mounted in the blocking device 3a and meshing with a rack 34 extending parallel to direction X, for adjusting the position of the blocking device 3a.

The control unit 5 may be programmed to set the front wheel bocking device 3a to a required position according to the type of the electric vehicle.

For instance, the control unit may be programmed to set the position of the blocking device 3a at a distance k= x + b/2 from the center of the opening 31, where x is a distance between the front wheel axis and the front edge of the battery dock 2, and b is the length of the battery dock 2. The distance x is available in the vehicle documentation and may be memorized in advance in the control unit 5.

The vehicle type can be entered manually into the control unit 5 by the driver or an operator, or could be recognized automatically for instance through a camera communicating with the control unit 5.

When the battery exchange station is equipped with a card reader 50 adapted to read smart cards, the driver may have the vehicle particulars registered in the smart card, for instance said distance x. In that case, when the smart card is read by card reader 50 before the vehicle gets on the ramp 30, the distance is sent to the control unit 5 and the control unit sets the position of the blocking device 3a accordingly.

As shown on Figures 7 and 8, the battery exchange station 6 also includes a lift lane along which the battery lift 4 can move in direction Y perpendicularly to direction X. The lift lane can be materialzed by one or two rails 40 on which the battery lift 4 can roll. The rails 40 may be at the level of the ground 41 and the ramp 30 is high enough so that the lift 4 may move under the vehicle lane. In a variant, the ramp 30 could be at ground level and the lift lane 40 underground.

The rails 40 are positionned under said opening 31 of the ramp 30.

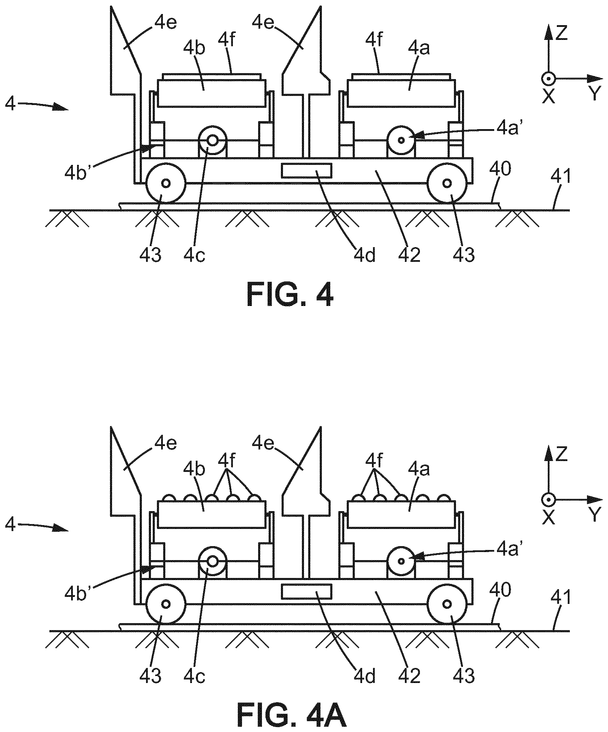

As shown on Figures 4, 7, 8, the battery lift 4 may include:
- a first platform 4a (longitudinal pad) for supporting a charged battery block 1,
- a first lift assembly 4a' for raising and lowering the first platform 4a,
- a second platform 4b (longitudinal pad) for supporting a discharged battery block 1,
- a second lift assembly 4b' for raising and lowering the second platform 4b.

The battery lift 4 may include a chassis 42 mounted by wheels 43 on the rails 40.

The battery lift 4 is thus able to transport battery blocks 1 from the charging storage to a place underneath the vehicle (a horizontal movement perpendicular to the axis of the vehicle) and then into the battery case 2 of the vehicle ( a vertical movement). The battery lift 4 is driven on the rails 40 by its own power.

The battery lift 4 may be equipped with a position sensor 4c and a device 4d for communication with the control unit 5. The position sensor 4c may include a source of infrared beam and a detector able to detect reflection of the infrared beam by the mirror 1c of the battery block 1. The infrared beam can be replaced by an a laser beam.

The lift assemblies 4a', 4b' may comprise each four pistons driven by their own power (e.g. by a hydraulic compressor). In a variant, the lift assemblies 4a', 4b' may be jacks. Jacks are preferably selected for battery exchange stations where the lift lane 40 is located under the road surface, because they require less vertical space beneath the vehicle.

Both platforms 4a, 4b, and particularly platform 4a, may have a sliding surface to facilitate movement of the battery block 1 in the horizontal plane, either by sliding proper, or by rolling. Each platforms 4a, 4b may be formed for instance by a metal frame provided with rollers, for instance balls, or more preferably rolls 4f having axes of rotation parallel to direction Y (Figure 4) or parallel to direction X (Figure 4A). In the example of Figure 4, the rolls 4a enable free rolling of the battery block 1 in direction X and free sliding of the battery block 1 in direction Y.

The rollers 4f could be replaced by any sliding surface, for instance a metallic surface or a surfaces coated with an antifriction material, i.e. a low friction material such as Teflon (R) or similar. These sliding surfaces may form the entire surfaces of said platforms 4a, 4b which may be flat or may be provided with sliding pads similar to those of Figure 1B or sliding beads similar to those of Figure 1C or other reliefs.

As a variant or in addition, the control unit 5 might be adapted to free the rotation of wheels 43 when the charged battery block 1 is lifted, to facilitate movement of the battery block 1 parallel to direction Y during fitting with the battery dock.

In this particular example, the platforms 4a, 4b slightly overlap the base 12 of the external casing 10 of the battery block 1 (for instance of 1 mm on each side).

The second platform 4b for the discharged battery block 1 is preferably equipped with a of funnel shaped guide 4e (having tapered sides), which allows for adjusting the position of the discharged battery block 1. The funnel shaped guide 4e has a sliding surface.

The control unit 5 is part of the battery exchange station and provides communication with the battery lift 4, the battery dock 2 and the blocking device 3a. It processes the sensor signals and based on them controls horizontal movement of the battery lift 4 and vertical movement of the lift assemblies 4a', 4b' and mechanical locks 2a of the battery case. Communication of the control unit 5 with the trolley 4 and the ramp 3 may be direct (wired), while communication of the control unit 5 with the battery dock 2 is preferably wireless.

### Battery exchange process

The battery exchange system as described above operates as follows.

When an electric vehicle V enters the ramp 30, possibly after adjustment of the position of the blocking device 3a as explained above, the driver moves the vehicle forward until the front wheels W enter the blocking devices 3a and then stops the vehicle. The blocking devices 3a ensure a correct front-rear position of the electric vehicle V and thus of the discharged battery block 1 of the vehicle. The vehicle position is confirmed to the control unit 5 by a signal received from pressure sensor 3b.

The control unit 5 then sends a signal to the battery lift 4 (more particilarly to one of the battery lifts of the battery exchange station 6) with a charged battery block 1 to move under the vehicle V, i.e. under opening 31.

The lateral orientation of the battery lift 4 is provided by the position sensor 4c of the trolley 4 and / or the position sensor 1c of the discharged battery 1. Data from position sensors are sent to the control unit 5 and when the position sensors 4c and 1c are directly above each other the control unit 5 sends an order to the battery lift 4 to stop.

After stopping, based on instructions of the control unit 5, the second lift assembly 4b' extends vertically upward the second platform 4b and pushes the discharged battery 1 deeper upward into the battery dock 2 to activate the pressure sensor 2d. Based on a signal received from sensor 2d, the control unit 5 sends a signal to remove the locks 2a from the battery holes 1a, which releases the discharged battery block 1 from the battery case 2.

After the battery release, the control unit 5 gives an instruction to lower the second lift assembly 4b' to move down the second platform 4b with discharged battery block 1.

When both down 4a, 4b are in the same low position, the control unit 5 has the battery lift 4 move paralel to direction Y by a constant predetermined distance so that the first platform 4a with the charged battery is directly beneath the battery dock 2.

The control unit 5 then (for instance with a delay of e.g. 5 seconds) instructs a release of mechanical locks 2a back to its extended (locked) position.

The charged battery block 1 is lifted on the first platform 4a (using the first lift assembly 4a') and pushed into the battery dock 2 to force the mechanical locks 2a to enter the holes 1a on the sides of the battery block 1. Inserting the charged battery blocjk 1 into the battery dock 2 is possible, even if the battery 1 is not perfectly aligned with the battery dock 2 (the tolerance can be for instance of +/- 10 cm). This can be achieved due to the battery block tapered shape and the sliding surfaces of the battery dock 2, the tappered sides of the battery block 1 and the bottom of the battery block 1 frely moving on the first platform 4a.

Alignment of the electrical connectors 1b, 2b of charged battery block 1 and battery dock 2 result in their connection, which is confirmed to the control unit 5.

The control unit 5 then sends a signal to lower the first lift assembly 4a' to its original low position.

Subsequently the control unit 5 may give an instruction to release the front wheel locking mechanism 3a, or the vehicle simply rolls thereon.

At the same time the control unit 5 instructs the battery lift 4 to return to the charging storage, where the discharged battery block 1 is removed from the second platform 4b, and another charged battery block 1 is loaded on the first platform 4a.

### Example to understand the invention

This example to understand the invention is similar to the first embodiment described above, it will therefore not be described in all details. All details not described again for the second embodiment are identical or similar to the first embodiment.

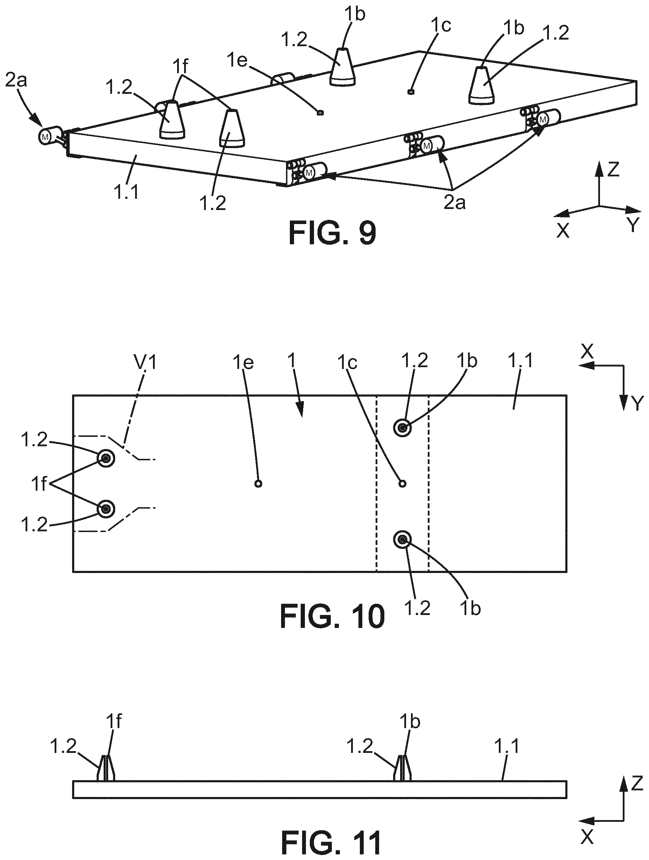

In this example to understand the invention as shown in Figures 9-13, the battery block 1 has a shape of a flat block 1.1 having homing cones (conical studs) 1.2 placed on its upper side.

Example of dimensions of the battery bloc may be: length 3000 mm, width 1100 mm and thickness 100 mm. The dimensions of the battery block 1 are adapted according to the size of the electric vehicle V. The battery block 1 may extend approximately from 500 mm behind the front axle of the vehicle V to approximately 600 mm behind the rear axle. The width of the battery is set for allowing locking mechanical locks 2a from the battery dock, on both sides of the battery block 1.

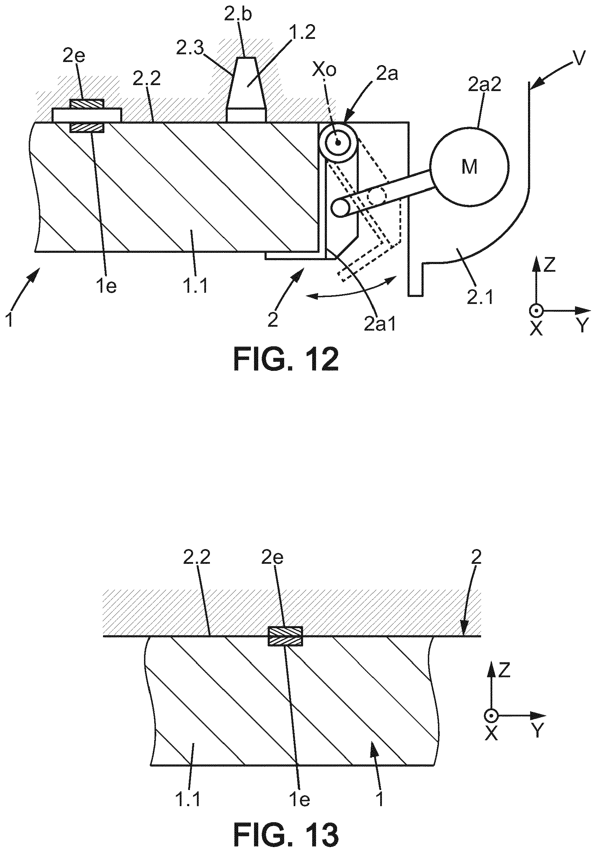

The battery block may have four identical homing cones 1.2 placed on upper side of the battery block 1.1, two front cones and two rear cones. This number of homing cones 1.2 is favorable to obtain a proper guidance of the battery block in the horizontal plane when inserting the battery block into the battery dock of the vehicle. During this insertion, each homing cone 1.2 is fitted inside a conical hole 2.3 of corresponding shape belonging to the top portion 2.2 of the battery dock 2 (Figure 12). During this insertion, the homing cones 1.2 slide inside the conical holes 2.3 to ensure horizontal guidance of the battery block 1 toward its proper position relative to the battery dock 2.

Relative to the vehicle V, the front homing cones 1.2 may be placed in a proximity of the front edge of the chassis on each side of the central tunnel and the rear homing cones 1.2 may be placed under the rear seats of the vehicle.

At least one pair of the homing cones 1.2 contains electric connector terminals 1b adapted to connect to complementary electrical connectors 2b formed in the corresponding conical holes 2.3. Homing cones 1.2 may also contain heating /cooling system connectors 1f for heating or cooling the battery block 1, adapted to connect with complementary heating /cooling system connectors (not shown) formed in the corresponding conical holes 2.3. Preferably the rear homing cones 1.2 contain electric connectors terminals 1b and the front homing cones 1.2 contain heating /cooling system connectors 1f.

Homing cones 1.2 are preferably in a shape of truncated cones with a cylindrical lower part, where the conical upper part is used for self-positioning of the battery block 1 during inserting into the battery dock of the vehicle and the lower cylindrical part is used for bringing the already centered battery block 1 to contact with electrical connectors 2b of the vehicle. Preferable dimensions of the homing cones may be: height approximately 150 mm and diameter approximately 120 mm.

A position sensor 1c may be located on the rear part of the battery block 1.1 between the two rear cones 1.2. It may be part of an optical sensor, e.g. in a form of a mirror or other reflection surface, while the battery dock 2 has a corresponding position sensor 2c (Figure 12) having for instance a directive light emitter and a light detector to detect light reflected by the mirror 1c.

A connection sensor 1e may be located on the upper part of the battery block 1.1. It is preferably a ferromagnetic counterpart of a magneto inductive sensor 2e located in the top portion 2.2 of the battery dock 2 (Figure 13).

The battery block 1 may be attached to the battery dock 2 by mechanical locks 2a. The mechanical locks 2a may be swinging locks extending on the sides 2.1 of the battery dock 2, formed for instance by a threshold of the car chassis.

As shown on figure 12, each mechanical lock 2a may include a latch 2a1 of L profile which is pivotally mounted in the battery dock 2 on a rotation axis X0 parallel to direction X. The latches are actuated by servomotors 2a2 placed for instance in the sides 2.1 of the battery dock 2, to rotate between an unlocked position (in dashed lines on Figure 12) where the locks 2a release the battery block 1 and a locked position (in plain lines) where the latches 2a1 are applied on the sides of the battery block and under the battery block to hold said battery block 1 in the battery dock 2.

The battery dock 2 is formed on the vehicle chassis and has dimensions corresponding to the flat block 1.1 with a side tolerance of e.g. 40 mm during insertion of the battery block 1 in the battery dock 2.

In this example to understand the invention, the first and second platforms 4a, 4b of the battery lift may be provided for instance with metal rollers 4f instead of silicone rollers. The metal rollers may be made for instance from steel with a zinc finish.

## Claims

1. A battery exchange system for a battery powered electric vehicle (V), comprising:
- an interchangeable battery block (1);
- a battery dock (2) defined at the underside of the electric vehicle (V) and open downwards, said battery dock (2) being adapted to receive the battery block (1) for electrical and mechanical connection by vertical fitting when such battery is lifted from beneath the electric vehicle (V), said battery block (1) being in a predetermined reference position, defined in a horizontal plane, relative to the electric vehicle (V) when said battery block (1) is electrically and mechanically connected to the battery dock (2);
- a battery lift (4) for lifting the battery block (1) underneath the electric vehicle (V);
wherein:
- said battery block (1) has an external casing (10) including a peripheral wall (11) and said peripheral wall (11) has a pyramid shaped part (14, 15) forming at least one bevel shaped male part;
- said battery dock has an internal casing (20) including an internal peripheral wall (21) and said internal peripheral wall (20) has a pyramid shaped internal part (24, 25) forming at least one bevel shaped female part;
- said battery block (1) and said battery dock (2) have guides (14, 15, 24, 25) adapted to mutually cooperate for guiding the battery block (1) horizontally toward the reference position when the battery block (1) is lifted for fitting with the battery dock (2), wherein said guides include said at least one bevel shaped male part (14, 15) and said at least one bevel shaped female part (24, 25) which is adapted to receive said bevel shaped male part;
- said guides (14, 15, 24, 25) include sliding surfaces (14, 15, 24, 25; 14a, 15a; 14c, 15c) which are adapted to slide on one another freely for said guiding of said battery block (1) horizontaly toward said reference position;
and the battery lift (4) is adapted to let the battery block (1) move freely horizontally relative to the electric vehicle (V) when the battery block (1) is lifted for fitting with the battery dock (2) and guided horizontally toward the reference position, wherein the battery lift includes a platform (4a) for supporting the battery block and a lift assembly (4a') for raising and lowering the platform;
**characterized in that** said battery block being freely movable horizontally on the platform, wherein said battery block is horizontally slidable on the platform or rollingly supported on the platform so as to be freely movable on the platform.

2. A battery exchange system according to claim 1, wherein said battery block (1) extends longitudinally in a first horizontal direction (X) and said at least one bevel shaped male part (14, 15) tapers at least in a second horizontal direction (Y) substantially perpendicular to said first horizontal direction.

3. A battery exchange system according to any one of claims 1 - 2, wherein said battery block (1) extends longitudinally in a first horizontal direction (X) and said at least one bevel shaped female part (24, 25) tapers at least in a second horizontal direction (Y) substantially perpendicular to said first horizontal direction.

4. A battery exchange system according to any of the preceding claims, wherein said sliding surfaces (14, 15) of said battery block (1) guides include sliding pads (14a, 15a).

5. A battery exchange system according to any one of claims 1-3, wherein said guides include respectively at least a roller (14d, 15d) and a tapering surface (24, 25) on which said roller is adapted to roll for guiding the battery block (1) horizontally toward the reference position.

6. A battery exchange system according to any one of the preceding claims, wherein the battery lift (4) is adapted to be freely movable horizontally relative to the electric vehicle (V) when the battery block (1) is lifted for fitting in the battery dock (2) and guided horizontally toward the reference position.

7. A battery exchange system according to claim 1, wherein said platform (4a) has rollers (4f).

8. A battery exchange system according to claim 7, wherein said battery block (1) is rollingly supported on the platform (4a) in a first direction (X), said rollers (4f) extending in a second direction (Y) substantially perpendicular to the first direction (X) and enabling free sliding of the battery block in the second direction (Y).

9. A battery exchange system according to any one of the preceding claims, further including a battery exchange station (6) having:
- a vehicle lane (3) on which the electric vehicle can advance in a first horizontal direction (X);
- a lift lane (40) along which the battery lift (4) can move in a second direction (Y) substantially perpendicular to the first direction (X), said lift lane being under the vehicle lane (3),
wherein the vehicle lane has an opening (31) adapted to give free passage to the battery block (1) when the battery block (1) is lifted for fitting in the battery dock (2), said opening (31) being in correspondence with the lift lane (40).

10. A battery exchange system according to claim 9, wherein the vehicle lane includes at least one wheel blocking device (3a) adapted to block the electric vehicle (V) in a predetermined position suitable for battery exchange.

11. A battery exchange system according to claim 10, further including an adjustment mechanism (33, 34) for adjusting a position of the blocking device (3a) in a direction (X) parallel to the vehicle lane (3).

12. A battery exchange system according to any one of the preceding claims, wherein the battery lift (4) is movable horizontally relative to the vehicle and the battery exchange system further includes:
- at least a position sensor (4c) adapted to detect whether the battery block (1) is properly positioned relative to the battery dock (2) for lifting the battery block (1) toward the battery dock (2),
- a control system adapted to move the battery lift (4) relative to the vehicle according to information received from said position sensor.

13. A battery exchange system according to any one of the preceding claims, wherein the battery lift (4) includes:
- a first platform (4a) for supporting a charged battery block (1),
- a first lift assembly (4a') for raising and lowering the first platform (4a),
- a second platform (4b) for supporting a discharged battery block (1),
- a second lift assembly (4b') for raising and lowering the second platform (4b).

## Patentansprüche

1. Batterieaustauschsystem für ein batteriebetriebenes Elektrofahrzeug (V), umfassend:
- einen austauschbaren Batterieblock (1);
- eine Batteriestation (2), die an der Unterseite des Elektrofahrzeugs (V) definiert und nach unten offen ist, wobei die Batteriestation (2) dazu ausgelegt ist, den Batterieblock (1) zur elektrischen und mechanischen Verbindung durch vertikales Anbringen aufzunehmen, wenn eine solche Batterie von unterhalb des Elektrofahrzeugs (V) angehoben wird, wobei sich der Batterieblock (1) in Bezug auf das Elektrofahrzeug (V) in einer vorbestimmten Referenzposition, die in einer horizontalen Ebene definiert ist, befindet, wenn der Batterieblock (1) elektrisch und mechanisch mit der Batteriestation (2) verbunden ist;
- einen Batterieheber (4) zum Anheben des Batterieblocks (1) unterhalb des Elektrofahrzeugs (V);
wobei:
- der Batterieblock (1) ein äußeres Gehäuse (10) aufweist, das eine Umfangswand (11) beinhaltet, und wobei die Umfangswand (11) einen pyramidenförmigen Teil (14, 15) aufweist, der zumindest einen abgeschrägt geformten männlichen Teil ausbildet;
- wobei die Batteriestation ein inneres Gehäuse (20) aufweist, das eine innere Umfangswand (21) beinhaltet, und wobei die innere Umfangswand (20) einen pyramidenförmigen Innenteil (24, 25) aufweist, der zumindest einen abgeschrägt geformten weiblichen Teil ausbildet;
- wobei der Batterieblock (1) und die Batteriestation (2) Führungen (14, 15, 24, 25) aufweisen, die dazu ausgelegt sind, miteinander zusammenzuwirken, um den Batterieblock (1) horizontal zur Referenzposition hin zu führen, wenn der Batterieblock (1) zum Anbringen an der Batteriestation (2) angehoben wird, wobei die Führungen den zumindest einen abgeschrägt geformten männlichen Teil (14, 15) und den zumindest einen abgeschrägt geformten weiblichen Teil (24, 25), der dazu ausgelegt ist, den abgeschrägt geformten männlichen Teil aufzunehmen, beinhalten;
- wobei die Führungen (14, 15, 24, 25) Gleitflächen (14, 15, 24, 25; 14a, 15a; 14c, 15c) beinhalten, die dazu ausgelegt sind, frei aufeinander zu gleiten, um den Batterieblock (1) horizontal zur Referenzposition hin zu führen;
und der Batterieheber (4) dazu ausgelegt ist, zuzulassen, dass sich der Batterieblock (1) in Bezug auf das Elektrofahrzeug (V) horizontal frei bewegen kann, wenn der Batterieblock (1) zum Anbringen an der Batteriestation (2) angehoben und horizontal zur Referenzposition hin geführt wird, wobei der Batterieheber eine Plattform (4a) zum Stützen des Batterieblocks und eine Hubanordnung (4a') zum Anheben und Absenken der Plattform beinhaltet,
**dadurch gekennzeichnet, dass** der Batterieblock auf der Plattform horizontal frei bewegbar ist, wobei der Batterieblock auf der Plattform horizontal gleiten kann oder rollend auf der Plattform aufliegt, um auf der Plattform frei bewegbar zu sein.

2. Batterieaustauschsystem nach Anspruch 1, wobei sich der Batterieblock (1) längs in einer ersten horizontalen Richtung (X) erstreckt und sich der zumindest eine abgeschrägt geformte männliche Teil (14, 15) zumindest in einer zweiten horizontalen Richtung (Y) im Wesentlichen senkrecht zur ersten horizontalen Richtung verjüngt.

3. Batterieaustauschsystem nach einem der Ansprüche 1 - 2, wobei sich der Batterieblock (1) längs in einer ersten horizontalen Richtung (X) erstreckt und sich der zumindest eine abgeschrägt geformte weibliche Teil (24, 25) zumindest in einer zweiten horizontalen Richtung (Y) im Wesentlichen senkrecht zur ersten horizontalen Richtung verjüngt.

4. Batterieaustauschsystem nach einem der vorangehenden Ansprüche, wobei die Gleitflächen (14, 15) der Führungen des Batterieblocks (1) Gleitkissen (14a, 15a) beinhalten.

5. Batterieaustauschsystem nach einem der Ansprüche 1 - 3, wobei die Führungen jeweils zumindest eine Rolle (14d, 15d) und eine sich verjüngende Fläche (24, 25) beinhalten, auf der die Rolle rollen kann, um den Batterieblock (1) horizontal zur Referenzposition hin zu führen.

6. Batterieaustauschsystem nach einem der vorangehenden Ansprüche, wobei der Batterieheber (4) dazu ausgelegt ist, in Bezug auf das Elektrofahrzeug (V) horizontal frei bewegbar zu sein, wenn der Batterieblock (1) zum Anbringen an der Batteriestation (2) angehoben und horizontal zur Referenzposition hin geführt wird.

7. Batterieaustauschsystem nach Anspruch 1, wobei die Plattform (4a) Rollen (4f) aufweist.

8. Batterieaustauschsystem nach Anspruch 7, wobei der Batterieblock (1) auf der Plattform (4a) in einer ersten Richtung (X) rollend aufliegt, wobei die Rollen (4f) sich in einer zweiten Richtung (Y) im Wesentlichen senkrecht zur ersten Richtung (X) erstrecken und ein freies Gleiten des Batterieblocks in der zweiten Richtung (Y) ermöglichen.

9. Batterieaustauschsystem nach einem der vorangehenden Ansprüche, ferner beinhaltend eine Batterieaustauschstation (6) mit:
- einer Fahrzeugspur (3), auf der sich das Elektrofahrzeug in einer ersten horizontalen Richtung (X) fortbewegen kann;
- einer Hubspur (40), entlang derer sich der Batterieheber (4) in einer zweiten Richtung (Y) im Wesentlichen senkrecht zur ersten Richtung (X) bewegen kann, wobei die Hubspur unter der Fahrzeugspur (3) ist,
wobei die Fahrzeugspur eine Öffnung (31) aufweist, die dazu ausgelegt ist, dem Batterieblock (1) freien Durchgang bereitzustellen, wenn der Batterieblock (1) zum Anbringen in der Batteriestation (2) angehoben wird, wobei die Öffnung (31) der Hubspur (40) entspricht.

10. Batterieaustauschsystem nach Anspruch 9, wobei die Fahrzeugspur zumindest eine Radblockiervorrichtung (3a) beinhaltet, die dazu ausgelegt ist, das Elektrofahrzeug (V) in einer vorbestimmten Position, die für einen Batterieaustausch geeignet ist, zu blockieren.

11. Batterieaustauschsystem nach Anspruch 10, ferner beinhaltend einen Einstellmechanismus (33, 34) zum Einstellen einer Position der Blockiervorrichtung (3a) in einer zur Fahrzeugspur (3) parallelen Richtung (X).

12. Batterieaustauschsystem nach einem der vorangehenden Ansprüche, wobei der Batterieheber (4) horizontal in Bezug auf das Fahrzeug bewegbar ist und das Batterieaustauschsystem ferner Folgendes beinhaltet:
- zumindest einen Positionssensor (4c), der dazu ausgelegt ist, zu erkennen, ob der Batterieblock (1) in Bezug auf die Batteriestation (2) richtig positioniert ist, um den Batterieblock (1) zur Batteriestation (2) anzuheben,
- ein Steuersystem, das dazu ausgelegt ist, den Batterieheber (4) in Bezug auf das Fahrzeug gemäß Informationen, die vom Positionssensor empfangen wurden, zu bewegen.

13. Batterieaustauschsystem nach einem der vorangehenden Ansprüche, wobei der Batterieheber (4) Folgendes beinhaltet:
- eine erste Plattform (4a) zum Stützen eines aufgeladenen Batterieblocks (1),
- eine erste Hubanordnung (4a') zum Anheben und Absenken der ersten Plattform (4a),
- eine zweite Plattform (4b) zum Stützen eines entladenen Batterieblocks (1),
- eine zweite Hubanordnung (4b') zum Anheben und Absenken der zweiten Plattform (4b).

## Revendications

1. Système d'échange de batterie pour un véhicule électrique alimenté par batterie (V), comprenant :
- un bloc-batterie interchangeable (1) ;
- une station de réception de batterie (2) définie au niveau du dessous du véhicule électrique (V) et ouverte vers le bas, ladite station de réception de batterie (2) étant adaptée pour recevoir le bloc-batterie (1) pour une connexion électrique et mécanique par installation verticale quand une telle batterie est levée depuis le dessous du véhicule électrique (V), ledit bloc-batterie (1) étant dans une position de référence prédéterminée, définie dans un plan horizontal, par rapport au véhicule électrique (V) quand ledit bloc-batterie (1) est électriquement et mécaniquement connecté à ladite station de réception de batterie (2) ;
- un dispositif de levage de batterie (4) pour lever le bloc-batterie (1) sous le véhicule électrique (V) ;
dans lequel :
- ledit bloc-batterie (1) comporte un carter externe (10) incluant une paroi périphérique (11) et ladite paroi périphérique (11) a une partie en forme de pyramide (14, 15) formant au moins une partie mâle en forme de biseau ;
- ladite station de réception de batterie comporte un carter interne (20) incluant une paroi périphérique interne (21) et ladite paroi périphérique interne (20) comporte une partie interne en forme de pyramide (24, 25) formant au moins une partie femelle en forme de biseau ;
- ledit bloc-batterie (1) et ladite station de réception de batterie (2) comportent des guides (14, 15, 24, 25) adaptés pour coopérer mutuellement pour guider le bloc-batterie (1) horizontalement vers la position de référence quand le bloc-batterie (1) est levé pour installation avec la station de réception de batterie (2), dans lequel lesdits guides incluent ladite au moins une partie mâle en forme de biseau (14, 15) et ladite au moins une partie femelle en forme de biseau (24, 25) qui est adaptée pour recevoir ladite partie mâle en forme de biseau ;
- lesdits guides (14, 15, 24, 25) incluent des surfaces de coulissement (14, 15, 24, 25 ; 14a, 15a ; 14c, 15c) qui sont adaptées pour coulisser librement les unes sur les autres pour ledit guidage dudit bloc-batterie (1) horizontalement vers ladite position de référence ;
et le dispositif de levage de batterie (4) est adapté pour laisser le bloc-batterie (1) se déplacer librement horizontalement par rapport au véhicule électrique (V) quand le bloc-batterie (1) est levé pour installation avec la station de réception de batterie (2) et guidé horizontalement vers la position de référence, dans lequel le dispositif de levage de batterie inclut une plateforme (4a) pour supporter le bloc-batterie et un ensemble de levage (4a') pour soulever et abaisser la plateforme, **caractérisé en ce que** ledit bloc-batterie est librement mobile horizontalement sur la plateforme, dans lequel ledit bloc-batterie peut horizontalement coulisser sur la plateforme ou est supporté de manière roulante sur la plateforme de manière à être librement mobile sur la plateforme.

2. Système d'échange de batterie selon la revendication 1, dans lequel ledit bloc-batterie (1) s'étend longitudinalement dans une première direction horizontale (X) et ladite au moins une partie mâle en forme de biseau (14, 15) rétrécit au moins dans une deuxième direction horizontale (Y) sensiblement perpendiculaire à ladite première direction horizontale.

3. Système d'échange de batterie selon l'une quelconque des revendications 1-2, dans lequel ledit bloc-batterie (1) s'étend longitudinalement dans une première direction horizontale (X) et ladite au moins une partie femelle en forme de biseau (24, 25) rétrécit au moins dans une deuxième direction horizontale (Y) sensiblement perpendiculaire à ladite première direction horizontale.

4. Système d'échange de batterie selon l'une quelconque des revendications précédentes, dans lequel lesdites surfaces de coulissement (14, 15) desdits guides de bloc-batterie (1) incluent des patins de coulissement (14a, 15a).

5. Système d'échange de batterie selon l'une quelconque des revendications 1-3, dans lequel lesdits guides incluent respectivement au moins un rouleau (14d, 15d) et une surface conique (24, 25) sur laquelle ledit rouleau est adapté pour rouler pour guider le bloc-batterie (1) horizontalement vers la position de référence.

6. Système d'échange de batterie selon l'une quelconque des revendications précédentes, dans lequel le dispositif de levage de batterie (4) est adapté pour être librement mobile horizontalement par rapport au véhicule électrique (V) quand le bloc-batterie (1) est levé pour installation dans la station de réception de batterie (2) et guidé horizontalement vers la position de référence.

7. Système d'échange de batterie selon la revendication 1, dans lequel ladite plateforme (4a) comporte des rouleaux (4f).

8. Système d'échange de batterie selon la revendication 7, dans lequel ledit bloc-batterie (1) est supporté de manière roulante sur la plateforme (4a) dans une première direction (X), lesdits rouleaux (4f) s'étendant dans une deuxième direction (Y) sensiblement perpendiculaire à la première direction (X) et permettant un coulissement libre du bloc-batterie dans la deuxième direction (Y).

9. Système d'échange de batterie selon l'une quelconque des revendications précédentes, incluant en outre une station d'échange de batterie (6) comportant :
- une voie pour véhicule (3) sur laquelle le véhicule électrique peut avancer dans une première direction horizontale (X) ;
- une voie pour dispositif de levage (40) le long de laquelle le dispositif de levage de batterie (4) peut se déplacer dans une deuxième direction (Y) sensiblement perpendiculaire à la première direction (X), ladite voie pour dispositif de levage étant sous la voie pour véhicule (3),
dans lequel la voie pour véhicule comporte une ouverture (31) adaptée pour donner un passage libre au bloc-batterie (1) quand le bloc-batterie (1) est levé pour installation dans la station de réception de batterie (2), ladite ouverture (31) étant en correspondance avec la voie pour dispositif de levage (40).

10. Système d'échange de batterie selon la revendication 9, dans lequel la voie pour véhicule inclut au moins un dispositif de blocage de roue (3a) adapté pour bloquer le véhicule électrique (V) dans une position prédéterminée appropriée pour l'échange de batterie.

11. Système d'échange de batterie selon la revendication 10, incluant en outre un mécanisme d'ajustement (33, 34) pour ajuster une position du dispositif de blocage (3a) dans une direction (X) parallèle à la voie pour véhicule (3).

12. Système d'échange de batterie selon l'une quelconque des revendications précédentes, dans lequel le dispositif de levage de batterie (4) est mobile horizontalement par rapport au véhicule et le système d'échange de batterie inclut en outre :
- au moins un capteur de position (4c) adapté pour détecter si le bloc-batterie (1) est correctement positionné par rapport à la station de réception de batterie (2) pour lever le bloc-batterie (1) vers la station de réception de batterie (2),
- un système de commande adapté pour déplacer le dispositif de levage de batterie (4) par rapport au véhicule en fonction d'informations reçues depuis ledit capteur de position.

13. Système d'échange de batterie selon l'une quelconque des revendications précédentes, dans lequel le dispositif de levage de batterie (4) inclut :
- une première plateforme (4a) pour supporter un bloc-batterie chargé (1),
- un premier ensemble de levage (4a') pour soulever et abaisser la première plateforme (4a),
- une deuxième plateforme (4b) pour supporter un bloc-batterie déchargé (1),
- un deuxième ensemble de levage (4b') pour soulever et abaisser la deuxième plateforme (4b).
